Europäisches Patentamt

(19) European Patent Office

Office européen des brevets

(11) Numéro de publication: **0 160 334**
**B1**

(12) **FASCICULE DE BREVET EUROPÉEN**

(45) Date de publication du fascicule du brevet:
28.02.90

(21) Numéro de dépôt: **85200541.2**

(22) Date de dépôt: **09.04.85**

(51) Int. Cl. ⁵: **F 41 G   3/32**, G 01 B  11/27,
G 02 B  27/30

(54) Collimateur d'harmonisation entre deux dispositifs optiques.

(30) Priorité:  **17.04.84 FR 8406057**

(43) Date de publication de la demande:
**06.11.85 Bulletin 85/45**

(45) Mention de la délivrance du brevet:
**28.02.90 Bulletin 90/09**

(84) Etats contractants désignés:
**DE FR GB NL SE**

(56) Documents cité:
**DE-A-1 815 754**
**FR-A-2 391 482**
**US-A-4 422 758**

(73) Titulaire: **TELECOMMUNICATIONS
RADIOELECTRIQUES ET TELEPHONIQUES T.R.T.
88, rue Brillat Savarin
F-75013 Paris (FR)**

(84) Etats contractants désignés: **FR**

(73) Titulaire: **N.V. Philips' Gloeilampenfabrieken
Groenewoudseweg 1
NL-5621 BA  Eindhoven (NL)**

(84) Etats contractants désignés: **DE GB NL SE**

(72) Inventeur: **Loy, Fernand René
Société Civile S.P.I.D. 209 rue de l'Université
F-75007 Paris (FR)**

(74) Mandataire: **Chaffraix, Jean
Société Civile S.P.I.D. 209, rue de l'Université
F-75007 Paris (FR)**

LIBERGRAF, STOCKHOLM 1990

## Description

L'invention concerne un collimateur pour le contrôle ou le réglage de l'harmonisation entre deux dispositifs optiques fonctionnant chacun sur une gamme de longueurs d'ondes distincte de l'autre, et en sortie duquel sont formés un premier et un second faisceau de lumière parallèle transmettant respectivement l'une et l'autre gamme de longueurs d'onde.

On connaît déjà parmi les dispositifs du même genre les télescopes autocollimateurs utilisés dans la gamme des longueurs d'ondes visibles et les collimateurs de contrôle de caméras infrarouge tels que les collimateurs type Newton. Le brevet des Etats-Unis d'Amérique US-A-4 422 758 décrit un autre dispositif fonctionnant sur deux gammes de longueurs d'ondes et conçu pour harmoniser une caméra thermique qui dispose d'un télémètre laser. Lorsque cette caméra est utilisée pour le tir d'un projectile, il faut que son réticule soit parfaitement harmonisé avec le télémètre laser servant à évaluer la distance de la cible. A cet effet, le faisceau laser est connecté sur une cible réfractaire qui s'échauffe et renvoie sur deux voies distinctes un faisceau de lumière parallèle infra-rouge vu par la caméra thermique et un faisceau de lumière parallèle visible observé dans un système à vision directe.

Le collimateur de l'invention n'est pas prévu pour aligner des systèmes optiques fonctionnant dans le visible et en infra-rouge par rapport à un faisceau laser. Il est donc de conception plus simple. Il s'agit d'un collimateur bispectral fonctionnant à partir d'une source de lumière émettant dans les deux gammes de longueurs d'ondes et qui sert de moyen de contrôle pour une caméra ayant une vision directe de jour et une vision en infra-rouge de nuit.

Ce collimateur est remarquable en ce qu'il comporte un miroir plan percé obliquement à 45° d'un trou-source éclairé par une source émettant dans les deux gammes de longueurs d'ondes, un collimateur à miroirs au foyer duquel est situé ledit trou-source et constitué d'un miroir et d'une lame à deux faces sensiblement parallèles inclinée d'un angle de 45° sur l'axe dudit miroir concave, positionnée sensiblement parallèle audit miroir plan et métallisée sur sa face exposée au rayonnement de ladite source sauf dans une zone au voisinage de l'axe du faisceau initial issu dudit trou-source où elle est semi-transparente, ledit premier faisceau de lumière parallèle étant formé après réflexions successives dudit faisceau initial sur ladite lame à faces parallèles, sur ledit miroir concave, à nouveau sur ladite lame à faces parallèles, sur ledit miroir plan, et après transmission à travers un filtre optique formant un premier hublot, ledit second faisceau de lumière parallèle étant formé après réflexions successives dudit faisceau initial sur ladite lame à faces parallèles, sur ledit miroir concave, et après transmission à travers ladite zone semi-transparente de ladite lame à faces parallèles et à travers un diasporamètre utilisé pour rendre lesdits premier et second faisceaux rigoureusement parallèles, l'écartement entre les axes desdits faisceaux de lumière parallèle étant identique à celui entre les axes desdits dispositifs optiques à harmoniser.

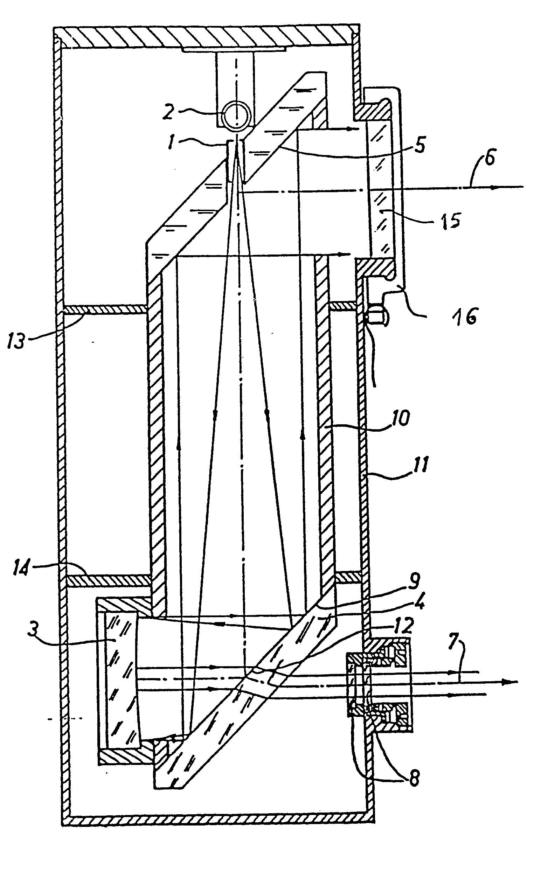

La description suivante en regard du dessin annexé, le tout donné à titre d'exemple fera bien comprendre comment l'invention peut être réalisée.

La figure unique représente un schéma de réalisation du collimateur conforme à l'invention, qui comprend un trou-source 1 pratiqué au centre d'un miroir plan 5 suivant un angle de 45° par rapport à la normale au miroir, éclairé par une source 2 rayonnant dans le visible et l'infra-rouge et placé au foyer d'un collimateur à miroirs. Ce collimateur à miroirs se compose d'un miroir concave 3 et d'une lame à deux faces sensiblement parallèles 4 métallisée sur sa face 9 exposée au rayonnement de la source sauf dans la zone centrale 12 où elle est semi-transparente. La lame à faces parallèles est sensiblement parallèle au miroir plan 5 et inclinée d'un angle de 45° sur l'axe du miroir concave.

Le faisceau de lumière visible et infra-rouge issu du trou-source 1 se réfléchit sur la lame à faces parallèles 4, sur le miroir concave 3, à nouveau sur la lame à faces parallèles 4, et enfin sur le miroir plan 5 pour donner le faisceau 6 de lumière parallèle dans la bande spectrale du visible et de l'infra-rouge, transmis à travers le filtre 15 transmettant l'infra-rouge et arrêtant le visible.

Le même faisceau issu du trou-source 1, réfléchi par la lame à faces parallèles 4 dans sa zone centrale 12 semi-transparente et par le miroir concave 3, traverse la lame à faces parallèles 4 réalisée en un matériau filtrant l'infrarouge (par exemple le verre) et un diasporamètre 8, pour donner naissance au faisceau 7 de lumière parallèle ne transmettant que le spectre visible.

Les défauts de parallélisme des deux faces de la lame 4 et de cette même lame par rapport au miroir plan 5 sont corrigés au moyen du diasporamètre 8 qui permet de rendre les faisceaux 6 et 7 rigoureusement parallèles au moment de la construction de l'appareil.

Le collimateur à miroirs 3, 4 et le miroir plan 5 sont montés rigidement sur le tube 10. Les matières de ces quatre pièces sont choisies pour avoir des coefficients de dilatation égaux ou très proches.

Le tube 10 est suspendu à l'intérieur du boîtier 11 de façon à être à l'abri des contraintes extérieures et des variations rapides de température. La suspension est représentée par 13 et 14. Le boîtier 11 supporte la source 2 le diasporamètre, et le filtre 15.

La source 2 est par exemple une lampe halogène de faible puissance dont le filament est la source visible et l'ampoule est la source infra-rouge.

Le boîtier 11 est fermé par un obturateur amovible 16 placé sur le trajet du faisceau de lumière parallèle 6. L'ensemble filtre 15 et obturateur 16 peut éventuellement être remplacé par un hublot fixe en un matériau transparent à l'infra-rouge ou encore transparent au visible et à l'infra-rouge (par exemple ZnS) ce qui permet d'effectuer le réglage du collimateur dans le visible.

En remplaçant le diasporamètre 8 par un hublot légèrement prismatique et le hublot 15 par un autre hublot légèrement prismatique de même angle que le précédent, le parallélisme des faisceaux 6 et 7 est obtenu par l'action conjuguée des deux hublots.

Les principales qualités de ce collimateur sont les suivantes:

- le parallélisme entre les deux faisceaux de lumière parallèles est stable dans un environnement sévère (température, chocs, vibrations);
- le système est compact, léger et facile à construire.

**Revendications**

1. Collimateur pour le contrôle ou le réglage de l'harmonisation entre deux dispositifs optiques fonctionnant chacun sur une gamme de longueurs d'ondes distincte de l'autre, et en sortie duquel sont formés un premier et un second faisceau de lumière parallèle (6, 7) transmettant respectivement l'une et l'autre gamme de longueurs d'onde, caractérisé en ce qu'il comporte un miroir plan (5) percé obliquement à 45° d'un trou-source (1) éclairé par une source (2) émettant dans les deux gammes de longueurs d'ondes, un collimateur (3, 4) à miroirs au foyer duquel est situé ledit trou-source et constitué d'un miroir concave (3) et d'une lame (4) à deux faces sensiblement parallèles inclinée d'un angle de 45° sur l'axe dudit miroir concave, positionnée sensiblement parallèle audit miroir plan et métallisée sur sa face (9) exposée au rayonnement de ladite source sauf dans une zone (12) au voisinage de l'axe du faisceau initial issu dudit trou-source où elle est semi-transparente, ledit premier faisceau (6) de lumière parallèle étant formé après réflexions successives dudit faisceau initial sur ladite lame (4) à faces parallèles, sur ledit miroir concave (3), à nouveau sur ladite lame (4) à faces parallèles, sur ledit miroir plan (5), et après transmission à travers un filtre optique formant un premier hublot (15), ledit second faisceau (7) de lumière parallèle étant formé après réflexions successives dudit faisceau initial sur ladite lame (4) à faces parallèles, sur ledit miroir concave (3), et après transmission à travers ladite zone semi-transparente (12) de ladite lame à faces parallèles et à travers un diasporamètre (8) utilisé pour rendre lesdits premier et second faisceaux rigoureusement parallèles, l'écartement entre les axes desdits faisceaux de lumière parallèle étant identique à celui entre les axes desdits dispositifs optiques à harmoniser.

2. Collimateur selon la revendication 1, caractérisé en ce que ledit miroir plan (5) et ledit collimateur (3, 4) à miroirs sont montés rigidement sur un même tube (10), les matériaux constituant lesdits miroirs et ledit tube étant choisis pour avoir des coefficients de dilatation égaux ou très proches.

3. Collimateur selon la revendication 2, caractérisé en ce que ledit tube est suspendu à l'intérieur d'un boîtier (11) supportant ladite source (2), ledit diasporamètre (8) et ledit premier hublot (15) traversé par ledit premier faisceau de lumière parallèle.

4. Collimateur selon la revendication 3, caractérisé en ce qu'un deuxième hublot légèrement prismatique est substitué audit diasporamètre, ledit premier hublot traversé par le premier faisceau de lumière parallèle étant également légèrement prismatique de même angle que le deuxième hublot, de façon à constituer avec ce dernier une variante dudit diasporamètre.

**Claims**

1. A collimator for controlling or adjusting the coordination between two optical devices which each operate in different wavelength regions, and at the output of which a first and a second parallel radiation beam (6, 7) are formed, having the one and the other wavelength region, respectively, characterized in that it comprises a plane mirror (5) which is obliquely pierced at an angle of 45° to form a source hole (1) illuminated by a source (2) emitting light in the two wavelength regions, a mirror collimator (3, 4) in whose focus said source hole is situated and which comprises a concave mirror (3) and a plate (4) having two substantially parallel surfaces, which plate is inclined at an angle of 45° to the axis of said concave mirror, extends substantially parallel to said plane mirror and is metallised on its surface (9) which is exposed to the radiation from the said source, except for an area (12) in the vicinity of the axis of the primary beam issuing from the said source hole where it is semitransparent, said first parallel radiation beam (6) being formed after successive reflections of the said primary beam from the said plate (4) having parallel surfaces, the said concave mirror (3), again the said plate (4) having parallel surfaces, and the said plane mirror (5), and, after transmission via an optical filter forming a first window (15), the said second parallel radiation beam (7) being formed after successive reflections of the said primary beam from the said plate (4) having parallel surfaces, the said concave mirror (3), and after transmission via the said semi-transparent area (12) of the said plate having parallel surfaces, and via a wedge compensator (8) used for rendering said first beam and said second beam exactly parallel to each other, the spacing between the axes of said parallel radiation beams being identical to that between the axes of said optical devices to be coordinated.

2. A collimator as claimed in Claim 1, characterized in that said plane mirror (5) and said mirror collimator (3, 4) are rigidly mounted on the same tube (10), the materials of said mirrors and said tube being selected so as to obtain equal or substantially equal coefficients of expansion.

3. A collimator as claimed in Claim 2, characterized in that said tube is suspended inside a casing (11) which accommodates said source (2), said wedge compensator (8) and said first window (15) which is traversed by said first parallel radiation beam.

4. A collimator as claimed in Claim 3, characterized in that said wedge compensator is replaced by a second slightly prismatic window, said first window which is traversed by the first parallel radiation beam being also slightly prismatic and having the same angle as the second window in combination with which it constitutes a variant of the said wedge compensator.

**Patentansprüche**

1. Kollimator zum Steuern oder Regeln der gegenseitigen Abstimmung von zwei optischen Vorrichtungen, die in je einem, sich vom anderen unterscheidenden Wellenlängenbereich arbeiten, an dessen Ausgang ein erstes und ein zweites Parallel-Lichtbündel (6, 7) gebildet werden, mit dem einen bzw. dem anderen Wellenlängenbereich, *dadurch gekennzeichnet*, daß dieser Kollimator einen flachen Spiegel (5), der eine Durchbohrung (1) unter einem Winkel von 45° aufweist, die durch eine in den zwei Wellenlängenbereichen aussendende Quelle (2) angestrahlt wird, und einen Spiegelkollimator (3, 4) enthält, der aus einem konkaven Spiegel (3) in dessen Brennpunkt sich die Durchbohrung befindet sowie einer Platte (4) besteht, deren zwei Seiten im wesentlichen parallel sind und geneigt unter einem Winkel von 45° in bezug auf die Achse des konkaven Spiegels verlaufen, wobei diese Platte im wesentlichen parallel zum flachen Spiegel verläuft und an der der Strahlung aus der Quelle zugewandten Seite (9) metallisiert ist mit Ausnahme in einer Zone (12) in der Nähe der Achse des durch die Durchbohrung gehenden ursprünglichen Bündels, wo die Platte halbdurchlässig ist, wobei das erste Parallel-Lichtbündel (6) nach aufeinanderfolgenden Reflexionen des ursprünglichen Bündels an der Platte (4) mit parallelen Flächen, am konkaven Spiegel (3), erneut an der Platte (4) mit parallelen Flächen, am flachen Spiegel (5) und nach Durchgang durch ein als erstes Fenster (15) ausgebildetes optisches Filter gebildet wird, und das zweite Parallel-Lichtbündel (7) nach aufeinanderfolgenden Reflexionen des ursprünglichen Bündels an der Platte (4) mit parallelen Flächen, am konkaven Spiegel (3) und nach Durchgang durch die halbdurchlässige Zone (12) dieser Platte mit parallelen Flächen und durch ein Diasporameter (8) zum genauen Parallelschalten der ersten und zweiten Bündel gebildet wird, wobei der Abstand zwischen den Achsen dieser Parallel-Lichtbündel gleich dem Abstand zwischen den Achsen der optischen abzustimmenden Vorrichtungen ist.

2. Kollimator nach Anspruch 1, *dadurch gekennzeichnet*, daß der flache Spiegel (5) und der Spiegelkollimator (3, 4) auf einem und demselben Rohr (10) starr befestigt sind, wobei die Herstellungswerkstoffe der Spiegel und des Rohrs derart gewählt werden, daß ihre Ausdehnungskoeffizienten gleich oder nahezu gleich sind.

3. Kollimator nach Anspruch 2, *dadurch gekennzeichnet*, daß das Rohr im Inneren eines Gehäuses (11) aufgehängt ist das die Quelle (2), das Diasporameter (8) und das erste, durch das erste Parallel-Lichtbündel durchquerte Fenster (15) trägt.

4. Kollimator nach Anspruch 3, *dadurch gekennzeichnet*, daß ein zweites, leicht prismatisches Fenster an der Stelle des Diasporameters angebracht ist, wobei das erste, vom Parallel-Lichtbündel durchstrahlte Fenster unter demselben Winkel wie der des zweiten Fensters ebenfalls leicht prismatisch ist, um mit diesem zweiten Fenster eine Abwandlung des Diasporameters zu bilden.